# EUROPEAN PATENT SPECIFICATION

(11) **EP 3 374 847 B1**
(45) Date of publication and mention of the grant of the patent: **05.08.2020**
(21) Application number: 15797275.3
(22) Date of filing: 09.11.2015
(51) Int. Cl.: G06F 3/0346

(54) **CONTROLLING OPERATION OF A 3D TRACKING DEVICE**
STEUERUNG DES BETRIEBS EINER 3D-VERFOLGUNGSVORRICHTUNG
COMMANDE DU FONCTIONNEMENT D'UN DISPOSITIF DE POURSUITE 3D

(43) Date of publication of application: 19.09.2018
(73) Proprietor: Hochschule für Technik und Wirtschaft Berlin, 10318 Berlin (DE)
(72) Inventor: JUNG, Thomas, 12459 Berlin (DE)
(74) Representative: Eisenführ Speiser
(86) International application number: PCT/EP2015/076099
(87) International publication number: WO 2017/080579

(56) References cited:
- US-A1- 2011 298 704
- US-B1- 6 426 745

## Description

The present invention relates to a method for controlling operation of a 3D tracking device in tracking a 3D modeling instrument, a controller for controlling operation of a 3D tracking device for tracking a 3D modeling instrument, to a 3D tracking device for determining a position of a 3D modeling instrument with respect to an object in a three-dimensional coordinate space, to a 3D tracking system, to a 3D modeling system, and to a computer program.

3D models represent an object using a set of vertices in a three-dimensional coordinate space. Vertices can be connected for instance by lines defining edges and either plane or curved outer faces of the object. The vertices are represented by coordinate data and other information. A 3D coordinate space is in this context often referred to as a virtual space.

3D models of objects can be created and changed based on user interaction with a 3D modeling system using a 3D modeling process. User interaction with a 3D modeling process is facilitated by employing a 3D modeling instrument. A 3D modeling instrument is a virtual tool having an allocated set of 3D modeling functionalities, in particular predefined manipulation functions for coordinate data. A 3D modeling instrument can be operated by generating or selecting vertices of the object to be modeled and by tracking movements of a pointing device in a two-dimensional or three-dimensional section of real space in order to determine the new coordinates of the selected or, generally speaking, any vertices affected by the modeling process.

A suitable 2D pointing device is for instance a computer mouse or an input pen tracked by a graphic tablet. 2D pointing devices are common in personal computer (PC) based working environments. 3D pointing devices are known, but to date are only scarcely available. Specialized 3D pointing devices such as the Space mouse produced by 3DConnection are used as a complement to 2D pointing devices for camera control.

The described 3D modeling is to be distinguished from 3D manipulation. 3D manipulation refers to moving an object in a coordinate space (virtual space) using a method that is in close correspondence to a method of manipulating an object using the hand or a tool in real space. Moving the object can comprise a translational movement and/or a rotational movement. Another form of 3D manipulation is a scaling operation, which changes the size of an object as a whole. As an example of a known 3D manipulation technology, US 2014/0015831 A1 describes an apparatus and method for processing the manipulation of a 3D object in a coordinate space. A manipulation tracker determines whether a 3D manipulating instrument is in contact with the surface of the 3D object and tracks the path of a contact point and processes the motion of the 3D object. A 3D manipulation process thus affects coordinates of vertices of an object without changing their relative arrangement with respect to each other in the coordinate space.

In contrast, 3D modeling, as used in the context of the present application, does change the relative arrangement of at least some of the vertices of the object with respect to each other. 3D modeling refers to generating or changing the appearance of the object, including the generation or change of an outer shape of the object, which cannot be achieved by upscaling or downscaling the object as a whole.US 2011/298704 A1 discloses a three-dimensional imaging and display system, in which user input is optically detected in an imaging volume by measuring the path length of an amplitude modulated scanning beam as a function of the phase shift thereof. Visual image user feedback concerning the detected user input is presented.

US 6,426,745 B1 discloses a computer system for manipulating graphic objects in a 3D scene. The manipulation of the graphic object is performed by defining a co-ordinate space based on a feature of a graphic object in the 3D scene, and con-straining a range of motion available to an object manipulation operation based on the defined coordinate system. A graphic object, or its constituent graphic elements, can be manipulated (e.g., translated, scaled or rotated) using the con-strained range of motion. The motion can be constrained to a motion plane, to a single direction within the motion plane, or in a direction perpendicular to the mo-tion plane. The definition of new coordinate spaces and constrained ranges of motion can be integrated into the beginning stage of a standard cursor manipulation technique (e.g., click-drag release) thus obviating the need for separate and distinct commands that tend to diminish user interface agility.

A 3D tracking device for a 3D modeling instrument thus must allow a user input for activating or deactivating a 3D modeling instrument and for distinguishing vertices, edges or faces of the object that are to be activated or deactivated with respect to performing the 3D modeling process when the 3D modeling instrument is in use, from other vertices that are not activated. Known 3D modeling instruments have a separate signaling channel allowing a user to indicate such activation or deactivation of vertices, edges or faces of the object. For instance, signaling buttons are used, as in the case of a computer mouse.

### SUMMARY OF THE INVENTION

According to a first aspect of the present invention, a method for controlling operation of a 3D tracking device of a 3D modeling instrument is provided. The method comprises:
- receiving coordinates of a plurality of vertices defining, with respect to a three-dimensional coordinate space, a plurality of edges or outer faces of an object;
- tracking, and providing to an external 3D modeling process, coordinates of a current position of at least one 3D modeling instrument with respect to the coordinate space, based on received position data of a current position of at least one external pointing instrument in real space;
- upon determining that any vertex, edge or face of the object qualifies as an activation vertex, activation edge or activation due to the current position of the 3D modeling instrument being in a predefined activation volume defined, with respect to the given vertex, edge or face, as a limited volume of the coordinate space in which the 3D modeling instrument can activate the external 3D modeling process:
   - activating an external 3D modeling process allocated to a combination of the 3D modeling instrument and the activation vertex, activation edge or activation face;
   - receiving, from the external 3D modeling process, modeling volume information defining, with respect to a current position of the activation vertex, activation edge or activation face, a limited active modeling volume of the coordinate space, in which the 3D modeling instrument can control the external 3D modeling process;
   - receiving, from the external modeling process, changed coordinates defining a modeled position of the activation vertex, activation edge or activation face with respect to the coordinate space; and
   - deactivating the external 3D modeling process upon determining that the current position of the 3D modeling instrument is outside the active modeling volume.

The method of the first aspect of the present invention enables an intuitive control of the operation of a 3D modeling instrument using an external pointing instrument in real space. It introduces an activation and deactivation concept that is based on monitoring, in the course of tracking the movement of the external pointing instrument, whether any vertex, edge or face of the object qualifies as an activation vertex, activation edge or activation face. The term activation vertex, activation edge or activation face is used herein to indicate that a position of the 3D modeling instrument falls within an activation volume defined for the given vertex, edge or face, thus triggering a selection of this vertex, edge or face in the context of the 3D modeling process. This way, a sensitive volume in the surrounding of the object is provided, in which a context-specific activation of an external 3D modeling process can be triggered. The use of an activation volume implies that activation can be achieved without having to actually "touch" a given vertex, edge or face of the object at zero distance between the 3D modeling instrument and the given vertex, edge or face of the object, The activation may be context-specific in that a 3D modeling process to be applied may depend on a given activation vertex, activation edge or activation face, which is in turn determined from the position of the 3D modeling instrument with respect to the object, and thus from the position of the external pointing device. The activation is further context-specific in that the 3D modeling process is at the same time allocated to a combination of the 3D modeling instrument and the activation vertex, activation edge or activation face. The type of 3D modeling to be performed using the 3D modeling instrument may thus differ depending on the activation vertex, activation edge or activation face selected by user-controlled movement of the 3D modeling instrument. As a non-limiting example, the 3D modeling instrument can be implemented such that a given specific vertex can only be moved along a certain line or in a certain plane upon activation, while another vertex can only be moved along a certain other line or in a certain other plane upon activation.

Furthermore, deactivating the 3D modeling instrument and thus the external 3D modeling process is achieved by moving the position of 3D the modeling instrument outside a limited active modeling volume of the coordinate space, defined with respect to a current position of the activation vertex, activation edge or activation face, in which the 3D modeling instrument can control the external modeling process.

The method can thus be used in combination with any of a variety of user interaction concepts, which do not provide a separate signaling channel for activation or deactivation of features of an object to be modeled.

In the following, embodiments of the method of the first aspect of the invention will be described.

The activation and the active modeling volumes are in some embodiments pre-selected. Their respective extension in the coordinate space can be selected depending on a required accuracy or on a given volume of interaction, or in dependence on a given 3D modeling instrument to be used for implementing the 3D modeling process. In other embodiments, these activation and active modeling volumes are dynamically adapted, for instance in dependence on a selected scaling of a graphical representation of the object.

The active modeling volume can be defined and monitored, for example, based on a single threshold distance amount to be measured between the position of the 3D modeling instrument and a selected vertex. In this particular case the active modeling volume represents a sphere around the selected vertex forming a center point. In another example, a distance amount from an edge can be used to define an active modeling volume which may be a cylinder with two half-spheres at its ends. The active modeling volume is in other embodiments defined by different threshold distance amounts in different directions, for instance directions corresponding to the coordinates axes of the coordinate space.

In one embodiment, the method further comprises receiving from the 3D modeling process modeling information identifying those vertices, edges or faces of the object for which the external 3D modeling process is activated and identifying a modeling surface or modeling line in the coordinate space, in which these vertices, edges or face can be moved according to the external 3D modeling process. In this embodiment, the 3D modeling process is advantageously provided with coordinates of a projection point of the 3D modeling instrument on the modeling surface or modeling line, as long as the 3D modeling process is activated.

In other embodiments, tracking the coordinates of the current position of the at least one 3D modeling instrument with respect to the coordinate space comprises:
- receiving position data pertaining to an external pointing instrument representing the 3D modeling instrument in a predetermined three-dimensional volume of real space; and
- calculating the coordinates in the three dimensional coordinate space from the position data according to a predetermined registration rule.

Preferably, a pointing instrument used in the context of this embodiment is registered with the predetermined three-dimensional volume of real space (the interaction volume) before the tracking process is started. Suitable pointing instruments are known. A particularly simple and preferred embodiment of a pointing instrument is formed by one or more finger on the hand of a user operating the 3D modeling instrument. This way, the user can utilize natural movements of his arm and hand to perform the 3D modeling process within the interaction volume, even improved in intuitive operation in comparison with the use of fingers in a drag-and-drop operation on touch-sensitive input devices such as touch-sensitive tablet devices.

The current position of the pointing instrument in the interaction volume can be detected using any of a variety of different techniques known per se. In preferred embodiments, the position of the pointing instrument is detected using electromagnetic radiation received from the pointing instrument. The electromagnetic radiation to be used for determining the current position of the pointing instrument is suitably detected from a predetermined point of the pointing instrument only. The current position of this point can be determined for instance by detecting a predetermined contrast feature generated by the pointing device in an image of the interaction volume, or by automatic evaluation with a pattern recognition technique applied to a one-, two- or three-dimensional image of the pointing device which is being monitored using a suitable number of cameras, or by providing the predetermined point with a point source of electromagnetic radiation that is detected selectively.

In other embodiments, a re-activation of the external 3D modeling process includes:
- monitoring, after the 3D modeling process has been deactivated, whether the current position of the 3D modeling instrument is within a predefined reactivation volume; and
- blocking a next activation of the external 3D modeling process for the activation vertex, activation edge or activation face until determining that the current position of the 3D modeling instrument has left the reactivation volume.

This can be implemented in a simple exemplary embodiment by determining an amount of a distance measure between the current position of the 3D modeling instrument and the activation vertex, activation edge or activation face, after deactivating the external 3D modeling process; and by determining whether a re-activation threshold distance amount from the activation vertex, activation edge or activation face has been exceeded by the 3D modeling instrument. A distance of a given point to a face can for instance be determined as a distance of the point from its projection point on the given face. If the projection point would be outside the given face, a distance of the point from an edge or vertex contained in the given face can be provided as a distance measure.

In some embodiments, the activation volume is contained in the active modeling volume. In other words, all points in the coordinate space within the predefined activation volume are also located within the active modeling volume. The re-activation volume contains the active modeling volume.

According to a second aspect of the present invention, a controller for controlling operation of a 3D tracking device in tracking a 3D modeling instrument of a 3D modeling instrument is provided. The controller comprises:
- a coordinate interface for receiving coordinates of a plurality of vertices defining a plurality of edges or outer faces of an object with respect to a three-dimensional coordinate space;
- a tracking unit, which is configured to:
   - track, and provide to an external 3D modeling processor executing a 3D modeling process, coordinates of a current position of at least one 3D modeling instrument with respect to the coordinate space, based on received position data of a current position of at least one external pointing instrument;
   - upon determining that any vertex, edge or face of the object qualifies as an activation vertex, activation edge or activation face due to the current position of the 3D modeling instrument being in a predefined activation volume defined, with respect to the given vertex, edge or face, as a limited volume of the coordinate space in which the 3D modeling instrument can activate the external 3D modeling process:
      - activate the external 3D modeling process allocated to a combination of the 3D modeling instrument and the activation vertex, activation edge or activation face;
      - receive, from the external 3D modeling process, modeling volume information defining, with respect to a current position of the activation vertex, activation edge or activation face, a limited active modeling volume of the co-ordinate space, in which the 3D modeling instrument can control the external 3D modeling process;
      - receive, from the external 3D modeling processor, changed coordinates defining a modeled position of the activation vertex, activation edge or activation face with respect to the coordinate space; and
      - deactivate the external 3D modeling process upon determining that the position of the 3D modeling instrument is outside the active modeling volume.

The controller of the second aspect of the present invention shares the advantages presented in the context of the method of the first aspect of the invention. The controller can be used in combination with any known 3D tracking device in order to improve its performance in implementing control of 3D modeling processes.

In the following, embodiments of the controller will be explained. Generally, the additional features of these embodiments correspond to embodiments of the method of the fist aspect of the present invention. Therefore, reference is also made to the description of those embodiments.

In one embodiment, the controller further comprises a 3D modeling interface for receiving from the 3D modeling processor vertex information identifying those vertices of the object for which the external 3D modeling process is activated. Typically, the vertex information is dependent on a given 3D modeling process. As explained above, it may even differ for different selected activation vertices, activation edges or activation faces of the object.

In such embodiments, the tracking unit is preferably further configured to
- determine coordinates of a projection point of the 3D modeling instrument on a modeling plane or modeling line of the coordinate space;
- provide the coordinates of the projection point to the 3D modeling processor as long as the 3D modeling process is activated.

In other embodiments implementing a reactivation feature, the tracking unit is further configured to:
- monitor an amount of a distance measure between the 3D modeling instrument and the activation vertex, activation edge or activation face, after deactivating the external 3D modeling process;
- block a next activation of the external 3D modeling process for the activation vertex, activation edge or activation face until determining that a re-activation threshold distance amount from the activation vertex, activation edge or activation face has been exceeded by the 3D modeling instrument.

In other embodiments, the tracking unit is further configured to track the coordinates of the current position of the at least one 3D modeling instrument with respect to the coordinate space by
- receiving position data pertaining to an external pointing instrument representing the 3D modeling instrument in a predetermined three-dimensional volume of real space; and
- calculating the coordinates from the position data according to a predetermined registration rule.

A third aspect of the present invention is formed by a 3D tracking device for determining a position of a 3D modeling instrument with respect to an object in a three-dimensional coordinate space, the 3D tracking device comprising
- a position sensing unit, which is configured to determine position data pertaining to an external pointing instrument in a predetermined three-dimensional volume of real space; and
- a controller according to the second aspect of the present invention or one of its embodiments, which receives the position data from the position sensing unit.

The 3D tracking device shares the advantages of the method of the first aspect of the invention and of the controller of the second aspect of the invention.

As explained before, in some embodiments the position sensing unit is configured to determine the position data using electromagnetic radiation received from the external pointing instrument.

According to a fourth aspect of the present invention, a 3D tracking system is provided, comprising a 3D tracking device according to the third aspect of the present invention or one of its embodiments, a pointing instrument and a display device which is connected with the 3D tracking device and configured to display a representation of the object in the three-dimensional coordinate space and a 3D modeling instrument at a position corresponding to the position of the pointing instrument in the predetermined three-dimensional volume of real space.

According to a fifth aspect of the present invention, a 3D modeling system is provided, comprising the 3D tracking system of the fourth aspect and a 3D modeling unit, which is in communication with the controller of the 3D tracking system. The processing unit is configured to
- provide coordinates of a plurality of vertices defining a plurality of edges or outer faces of an object with respect to a three-dimensional coordinate space;
- receive an activation signal, the activation signal also identifying the activation vertex, activation edge or activation face;
- select the 3D modeling process to be applied to the object based on a combination of the 3D modeling instrument and the activation vertex, activation edge or activation face;
- receive, from an external controller for controlling operation of a tracker of a 3D modeling instrument, coordinates of a current position of the 3D modeling instrument with respect to the coordinate space;
- determine changed coordinates defining a modeled position of the activation vertex, activation edge or activation face with respect to the coordinate space, based on the coordinates of a current position of the 3D modeling instrument;
- provide the changed coordinates to the external controller.

The 3D modeling system shares the advantages of the other aspects of the present invention.

In one embodiment, the processing unit is further configured to provide modeling information pertaining to the selected 3D modeling process identifying those vertices, edges or faces of the object for which the selected 3D modeling process is activated and identifying a modeling surface or modeling line in the coordinate space, in which these vertices, edges or face can be moved according to the selected 3D modeling process.

A sixth aspect of the present invention is formed by a computer program comprising executable code for executing a method for controlling operation of a 3D tracking device of a 3D modeling instrument according to first aspect of the invention or one of its embodiments when executed by a processor of a computer.

The invention refers to a multi platform 3D modeling technique that enables the development of a 3D modeling tool which can be controlled by either 2D input devices (such as, but not limited to, computer mice, keyboards, graphic tablets, pointing devices on a surface).or by 3D input devices. This modeling technique is especially suitable for 3D interaction environments controlled by modeling instruments such as, but not limited to, pointers, fingers, pens or devices alike, whose positions can be continuously and wirelessly tracked in space. Based on this novel modeling technique new 3D modeling tools can be successfully implemented. The determination of the possible modeling operations based on the selected object's face is a task of the modeling tool used by the modeling technique described in this application.

### BRIEF DESCRIPTION OF THE DRAWINGS:

In the drawings:
Fig. 1 is a flow diagram that illustrates an embodiment of a method for controlling operation of a 3D tracking device of a 3D modeling instrument;
Fig. 2 is a flow diagram that illustrates another embodiment of a method for controlling operation of a 3D tracking device of a 3D modeling instrument;
Fig. 3 is a flow diagram that illustrates another embodiment of a method for controlling operation of a 3D tracking device of a 3D modeling instrument;
Fig. 4 is a flow diagram that illustrates another embodiment of a method for controlling operation of a 3D tracking device of a 3D modeling instrument;
Fig. 5 shows a block diagram of an embodiment of a controller for controlling the operation of a 3D tracking device of a 3D modeling instrument, and a modeling processor;
Fig. 6 shows a block diagram of an embodiment of a controller for controlling the operation of a 3D tracking device of a 3D modeling instrument with a 3D modeling interface, and a modeling processor;
Fig. 7 shows a block diagram of an embodiment of a 3D tracking device;
Fig. 8 shows a schematic illustration of an embodiment of a 3D tracking system;
Fig. 9 shows a schematic illustration of an embodiment of a 3D modeling system;
Fig. 10 shows a representation of a 3D object in a coordinate space according to one of the process steps of the method for controlling operation of a 3D tracking device of a 3D modeling instrument;
Fig. 11 shows a representation of a 3D object and a modeling tool in a coordinate space according to another of the process steps of the method for controlling operation of a 3D tracking device of a 3D modeling instrument;
Fig. 12 shows a representation of a 3D object and a modeling tool in a coordinate space according to another of the process steps of the method for controlling operation of a 3D tracking device of a 3D modeling instrument; and
Fig. 13 shows a representation of a 3D object and a modeling tool in a coordinate space according to another of the process steps of the method for controlling operation of a 3D tracking device of a 3D modeling instrument.
Fig. 14 shows a representation of a 3D object and a modeling tool in a coordinate space according to another of the process steps of the method for controlling operation of a 3D tracking device of a 3D modeling instrument.

### DETAILED DESCRIPTION OF EMBODIMENTS

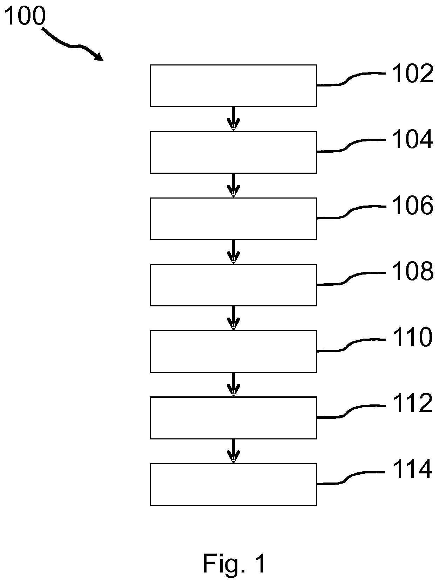

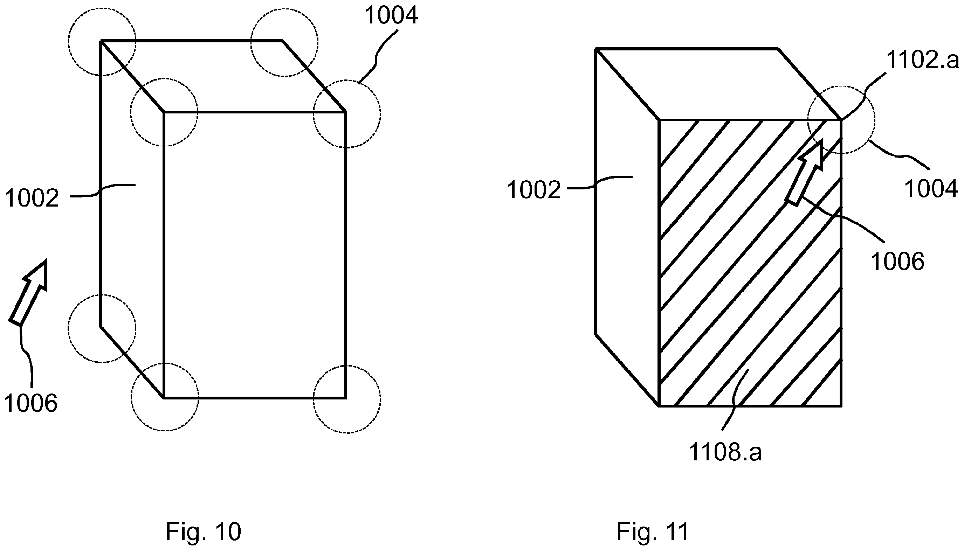

Fig. 1 is a flow diagram that illustrates an embodiment of a method 100 for controlling operation of a 3D tracking device of a 3D modeling instrument. The following description refers in parallel to Figs. 10 to 13.

In the method 100, also in reference to the examples depicted in Fig. 10, 11, 12 and 13, coordinates of a plurality of vertices defining a plurality of edges or outer faces of an object, for example a rectangular box 1002 with respect to a three-dimensional coordinate space are received in a step 102. The positions of all vertices, edges and faces of the object in the coordinate space are therefore accessible to the method 100. The present step 102 is not limited to receiving the coordinates of rectangular boxes. The rectangular box 1002 is merely used as an explanatory example. The coordinates of objects belonging to other object families such as, but not limited to, roof-like volumes, pyramids, prisms, non-uniform rational basis spline (NURBS)-objects or solids of revolution, can also be used in accordance with the present invention. In the case of solids of revolution, the coordinates of vertices received, that define edges or outer faces, are to be understood as the points in the coordinate space needed to represent the object univocally. In the case of a cone, for instance, these points would be the two ends of the revolution axis located at the center of the top and the bottom surfaces of the cylinder and one point at the side, at a given distance on a perpendicular direction to the revolution axis from one of the two ends. Varying the number of coordinate points not located in the revolution axis gives raise to cone objects (1 coordinate point), cylinders as already discussed (2 coordinate points) or more complex solids of revolution (more than 2 coordinate points both in the revolution axis and at the surface side). The coordinates of a current position of at least one 3D modeling instrument 1006 with respect to the coordinate space are tracked in a step 104, based on received position data of a current position of at least one external pointing instrument in real space. The position of at least one modeling instrument 1006, which in a particular embodiment can be defined by a single point in the coordinate space (e.g. the tip of an arrow, the crossing point of two segments, the centre of a circle of a given radius, a given pixel in a graphical representation...), is herein considered as a representation in the virtual or coordinate space of at least one external pointing instrument (e. g. fingers, pointers, pens or similar devices) in the real space, and is therefore also accessible to the method 100. In a particular embodiment of the present invention, the coordinates of the modeling instrument in the 3D coordinate space are calculated from position data pertaining to at least one external pointing instrument in a predetermined 3D volume of real space according to a predetermined registration rule.

Upon determining in a step 106 that any vertex, edge or face of the object qualifies as an activation vertex (e.g. vertex 1102.a), activation edge or activation face due to the current position of the 3D modeling instrument being in a predefined activation volume defined, with respect to the given vertex, edge or face, as a limited volume of the coordinate space in which the 3D modeling instrument can activate the external 3D modeling process, method 100 activates, in a step 108, an external 3D modeling process allocated to a combination of the 3D modeling instrument 1006 and the activation vertex, edge or plane (Fig. 11 shows an activation vertex 1102.a), receives , from the external 3D modeling process, in a step 110 modeling volume information defining, with respect to a current position of the activation vertex, activation edge or activation face, a limited active modeling volume of the coordinate space, in which the 3D modeling instrument can control the external 3D modeling process, and in a further step 112 changed coordinates defining a modeled position of the activation vertex 1102.b, edge or plane with respect to the coordinate space, and finally, deactivates the external 3D modeling process in a step 114 when the position of the modeling instrument is located outside the active modeling volume. In other words, when, at a given time, the current position of the modeling instrument 1006 lies within a predefined activation volume with respect to a given vertex (for example a sphere 1004 centered on vertex 1102.a), edge or face of the object, the method activates an external modeling process which depends on the modeling instrument 1006 and the activation vertex 1102.a and defines an active modeling volume wherein the position of the modeling instrument can be varied without forcing a termination of the modeling process.

In a particular embodiment shown in Fig. 10, the activation volume is a sphere 1004 of a radius r centered at the activation vertex. The method can determine if the modeling tool has entered the activation modeling by monitoring an amount of distance measure being indicative of the distance between the current position of the 3D modeling instrument and the respective vertex of the object. In can also select a modeling plane or line according to both to the relative position of the modeling instrument and the selected vertex and the modeling process selected.

While the modeling instrument remains within the activation volume, the method receives from the external 3D modeling process the coordinates of the object in the coordinate space after the modeling process has been applied to it (most probably having changed its dimensions in the virtual space). As soon as the modeling object moves outside this active modeling volume, for example by moving a given distance 1210 away from the activation vertex, edge or line in at least one predetermined direction, the modeling process outputs the coordinates of the modeled object 1402 at that time and it is deactivated by the method. In another embodiment of the method, all points in the coordinate space within the predefined activation volume are also located within the limited active modeling volume.

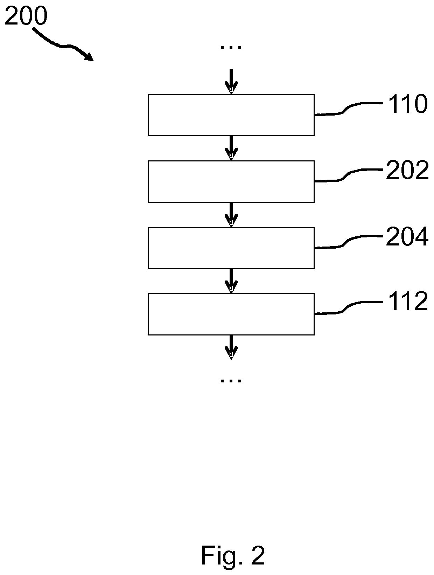

Fig. 2 is a flow diagram that illustrates another embodiment 200 of a method for controlling operation of a 3D tracking device of a 3D modeling instrument. This embodiment follows the process steps described in connection with Fig. 1 but adds two further steps between the reception 110 of the modeling volume information, and the reception 112 of the changed coordinates of the selected vertex, edge or face. In a first further step 202, the method receives from the 3D modeling process modeling information identifying those vertices, edges or faces of the object for which the external 3D modeling process is activated, i.e. the vertices of the object 1002 that, under the application of the modeling process, are subject to change their position in the virtual space and modeling information identifying a modeling surface or modeling line in the coordinate space, in which these vertices, edges or face can be moved according to the external 3D modeling process. The modeling surface or line can be for example determined by the relative position of the modeling instrument with respect to the activation vertex, edge or face. In a non limiting embodiment of the invention, the modeling plane would be the plane defined by the nearest face 1108.a to the modeling instrument containing the selected vertex 1102.a. In another embodiment a modeling line containing one of the edges including the selected vertex is selected. In a second further step 204 of this particular embodiment, the method provides the coordinates of a determined projection point 1102.b to the external 3D modeling process in a step 206 as long as this process is activated.

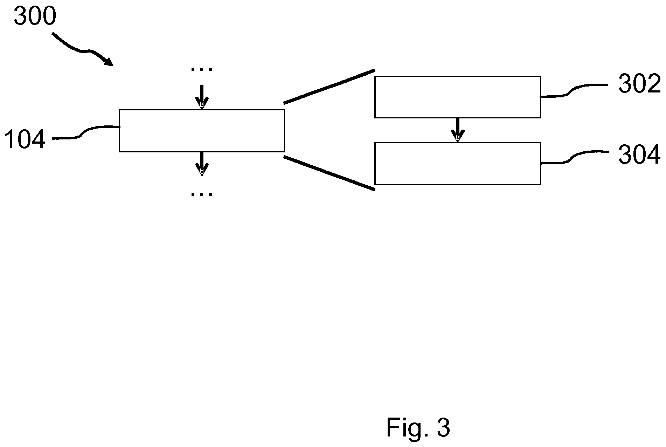

Fig. 3 is a flow diagram that illustrates another embodiment 300 of a method for controlling operation of a 3D tracking device of a 3D modeling instrument. In this particular embodiment, the tracking of the current position of at least one 3D modeling instrument with respect to the coordinate space in the step 104 comprises two steps 302 and 304. First, the method receives in step 302 the position data pertaining to an external pointing instrument in a predetermined three-dimensional volume of real space (examples of external pointing devices include. the user's fingers, a pointer, a pen or a similar device) representing the 3D modeling instrument 1006, and then, in step 304, the method calculates the coordinates in the virtual or coordinate space from the position data of the pointing object according to a predetermined registration rule.

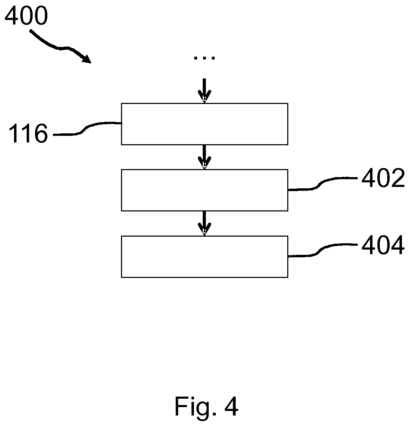

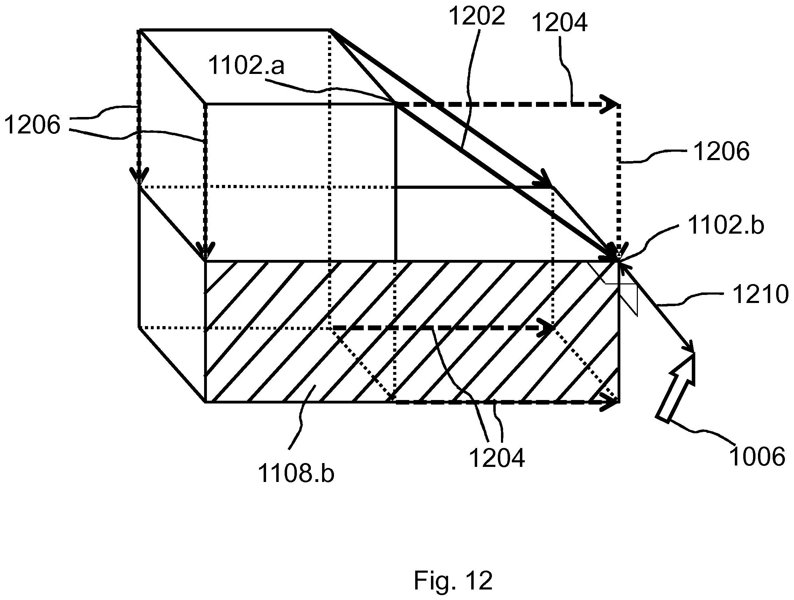

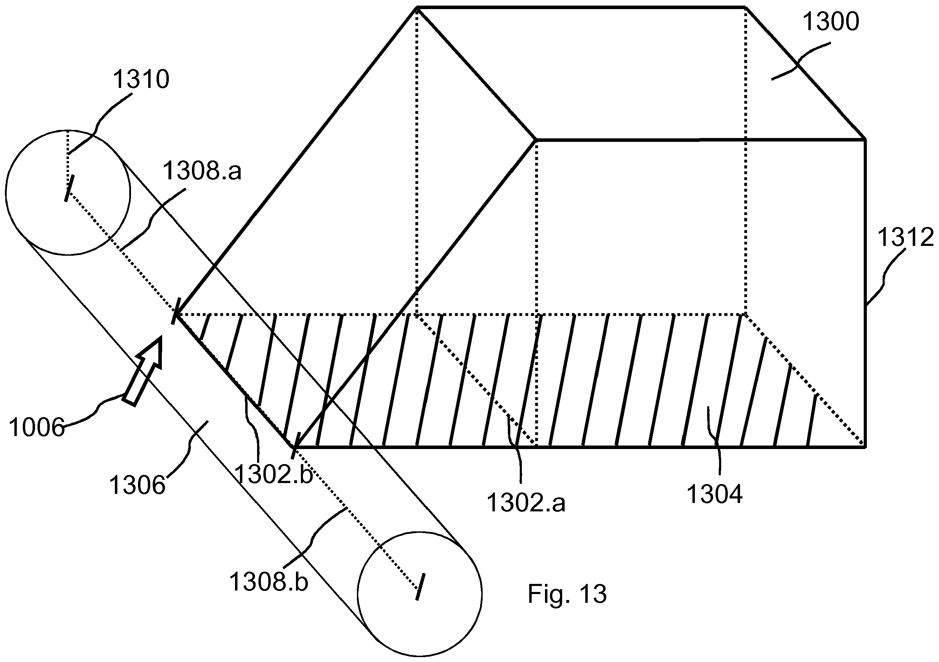

Fig. 4 is a flow diagram that illustrates another embodiment 400 of a method for controlling operation of a 3D tracking device of a 3D modeling instrument. This embodiment, also with reference to Fig. 13, comprises two further process steps that take place after any of the previous embodiments 100, 200 or 300 deactivate the external 3D modeling process after the modeling instrument has moved outside the active modeling volume. In the first step 402 of these two steps, the method monitors, after the 3D modeling process has been deactivated, whether the current position of the 3D modeling instrument is within a predefined reactivation volume; and further blocks, in step 404, a next activation of the external 3D modeling process for the activation vertex (1102.a and 1102.b in Fig. 12), activation edge (1302.a and 1302.b in Fig. 13) or activation face until determining that the current position of the 3D modeling instrument has left the reactivation volume.

In a particular embodiment according to the present invention, after the 3D modeling process has been deactivated, the method monitors an amount of distance measure between the modeling instrument and the activation vertex, edge, or face and blocks a next activation of the 3D modeling process for the given activation vertex, edge or face, until determining that a reactivation threshold distance from the activation vertex, edge or face has been exceeded by the 3D modeling instrument.

In a particular embodiment of the method, the activation volume is contained within the reactivation volume. This minimizes the risk of unwanted selections after the external 3D modeling process is deactivated, but the modeling tool is still located close to the activation vertex, edge or face. Any unwanted movement of the pointing device in the real space would be transferred in the coordinate space and could result in the modeling instrument re-activating the same activation vertex, edge or face for a further 3D modeling process, even if this is not intended by a user.

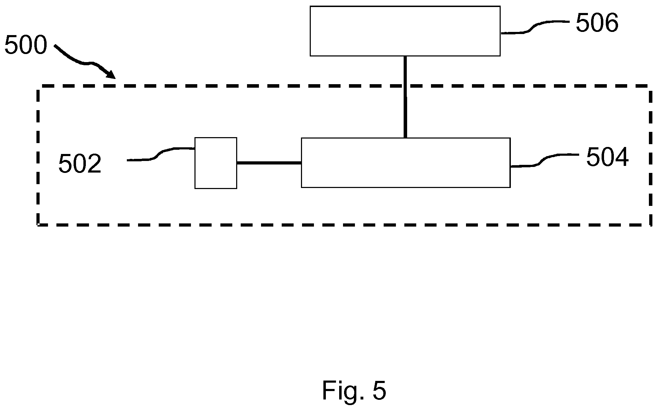

Fig. 5 shows a block diagram of an embodiment of a controller 500 for controlling the operation of a 3D tracking device of a 3D modeling instrument, shown together with a modeling processor, which is external to the controller. In other embodiments (not shown), the controller and the modeling processor are integrated in a single processor device.

The controller 500 includes a coordinate interface 502 for receiving coordinates of a plurality of vertices defining a plurality of edges or outer faces of an object with respect to a three-dimensional coordinate space, and a tracking unit 504 which is linked to a modeling processor 506. The tracking unit is configured to track, and provide to an external 3D modeling processor executing a 3D modeling process, coordinates of a current position of at least one 3D modeling instrument 1006 with respect to the coordinate space, based on received position data of a current position of at least one external pointing instrument.

Upon determining that any vertex, edge or face of the object qualifies as an activation vertex, activation edge or activation face due to the current position of the 3D modeling instrument being in a predefined activation volume defined, with respect to the given vertex, edge or face, as a limited volume of the coordinate space in which the 3D modeling instrument can activate the external 3D modeling process, the tracking unit is configured to activate the external 3D modeling process allocated to a combination of the 3D modeling instrument 1006 and the activation vertex (e.g. 1102.a), activation edge or activation face, to receive, from the external 3D modeling processor 506, both modeling volume information defining, with respect to a current position of the activation vertex, activation edge or activation face, a limited active modeling volume of the coordinate space, in which the 3D modeling instrument can control the external 3D modeling process and changed coordinates defining a modeled position of the activation vertex (e.g. 1102.b), activation edge or activation face with respect to the coordinate space, and to deactivate the external 3D modeling process upon determining that the position of the 3D modeling instrument is outside the active modeling volume.

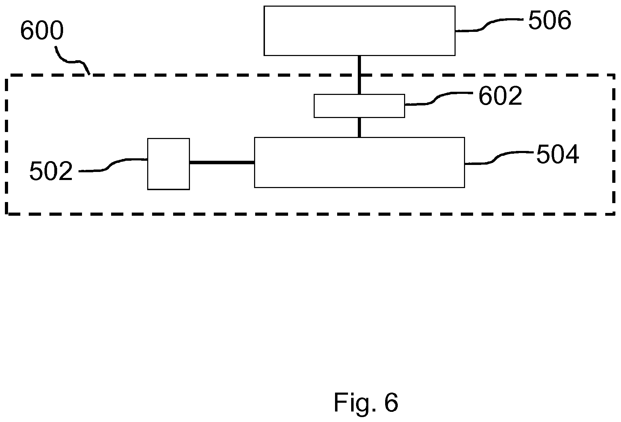

Fig. 6 shows a block diagram of an embodiment of a controller 600 for controlling the operation of a 3D tracking device of a 3D modeling instrument with a 3D modeling interface 602, and a modeling processor 506. This embodiment includes the controller 500 and adds a 3D modeling interface 602. The tracking unit of this embodiment is further configured to provide coordinates of a projection point on the modeling surface or modeling line to the external 3D modeling process as long as the external 3D modeling process is activated.

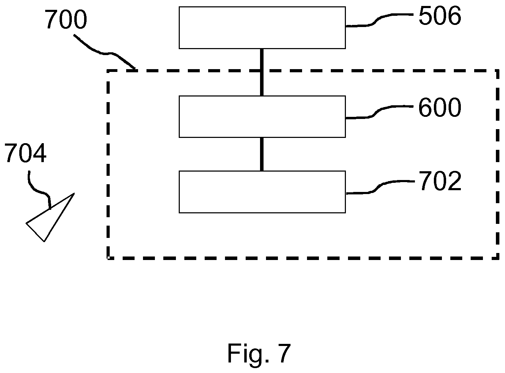

Fig. 7 shows a block diagram of an embodiment of a 3D tracking device 700 which includes a position sensing unit configured to determine position data pertaining to an external pointing instrument 704 in a predetermined three dimensional volume of real space and a controller 600 linked to an external modeling processor which receives the data from the position sensing unit 702. In a particular embodiment, the sensing unit is configured to determine the position data using electromagnetic radiation received from the external pointing instrument.

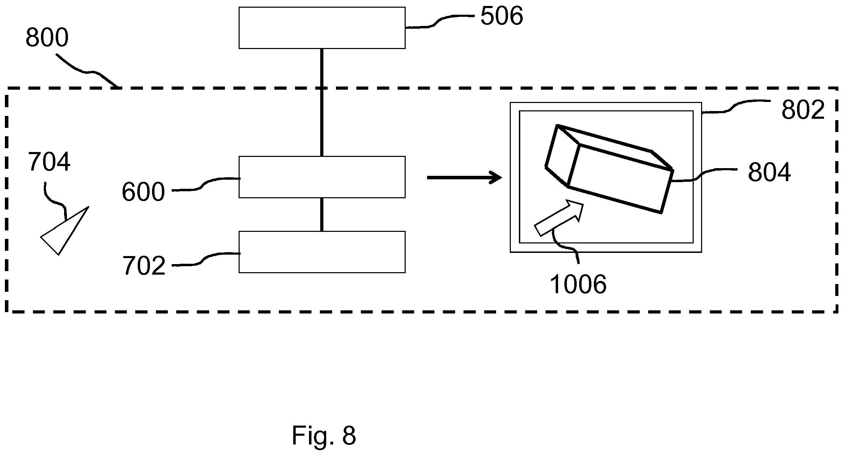

Fig. 8 shows a schematic illustration of an embodiment of a 3D tracking system including a tracking device 700 as disclosed in reference to Fig. 7, a pointing instrument 704 and a display device 802 configured to display a representation of the object 804 in the three dimensional coordinate space and a 3D modeling instrument 806 at a position corresponding to the position of the pointing instrument in the predetermined three-dimensional volume of real space. In an embodiment of the present invention the display is a two dimensional screen. In another embodiment of the present invention the display is a virtual 3D environment representing the 3D coordinate space, such as for example a cave automatic virtual environment. In yet another embodiment of the present invention the display is embedded in a head-mounted device such as a helmet or glasses.

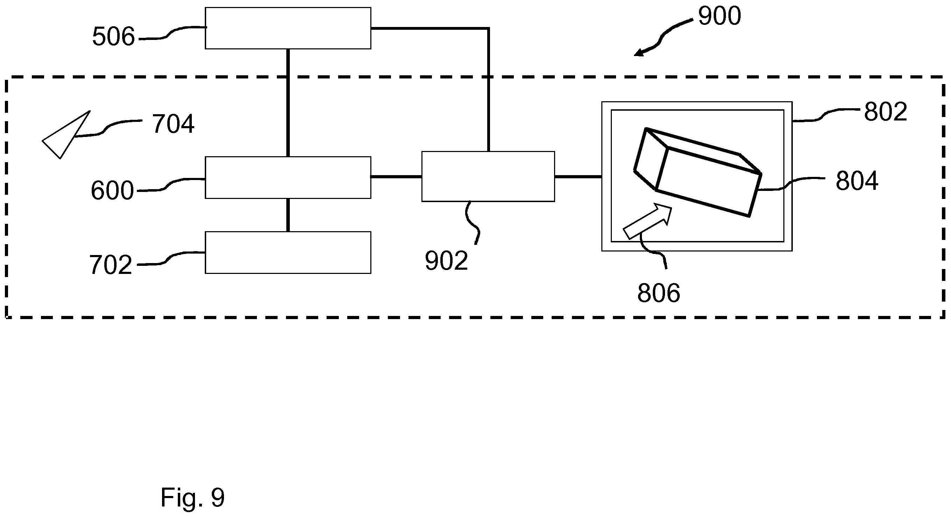

Fig. 9 shows a schematic illustration of an embodiment of a 3D modeling system 900 which includes the 3D tracking system disclosed in reference to Fig. 8 and a 3D modeling unit 902, which is configured to provide coordinates of a plurality of vertices defining a plurality of edges or outer faces of an object 102 with respect to a three-dimensional coordinate space, to receive an activation signal, the activation signal also identifying the activation vertex, activation edge or activation face, to select the 3D modeling process to be applied to the object based on a combination of the 3D modeling instrument 806 and the activation vertex, activation edge or activation face, to receive, from an external controller 600 for controlling operation of a tracker of a 3D modeling instrument, coordinates of a current position of the 3D modeling instrument 806 with respect to the coordinate space, to determine changed coordinates defining a modeled position of the activation vertex, activation edge or activation face with respect to the coordinate space, based on the coordinates of a current position of the 3D modeling instrument 806, and to provide the changed coordinates to the external controller 600.

Fig. 10 shows a representation of a 3D object 1002 in a coordinate space according to one of the process steps of the method for controlling operation of a 3D tracking device of a 3D modeling instrument. The position of the modeling instrument 1006 in the coordinate space is controlled by the tracked position of a pointing device 704 in the real space. In this particular embodiment, the activation volume is represented by spheres (e.g. sphere 104) centered at the vertices of the object. In other embodiments the activation volume can be any given volume including within it any vertex, edge or line subject of being activated. At this particular stage of the method, no vertex, edge or plane of the object has been selected as an activation vertex, edge or plane because the modeling instrument has not entered any predefined activation volume.

Fig. 11 shows a representation of a 3D object and a modeling tool in a coordinate space according to another of the process steps of the method for controlling operation of a 3D tracking device of a 3D modeling instrument. In this example, the current position of the modeling tool 1006 has entered the predefined activation volume located around vertex 1102.a of the object 1002 According to a predetermined modeling process, vertex 1102.a is selected as the activation vertex, and a modeling plane is determined, based on the closest object face 1108.a to the modeling tool. In this particular embodiment, the selection of this plane fixes the modeling plane where the position of the modeling instrument will be projected as long as the modeling process stays active. In another embodiment another predetermined modeling process is allocated to that vertex, enabling for example the modeling of vertex 1102.a along one of the lines defined by the edges including the selected vertex, The allocated modeling process also defines which of the vertices of the object are subject to change their positions enabling many modeling possibilities such as for example enlarging the object in a given direction without changing the angles between the edges or moving a single edge in space and modifying the other edges and the resulting faces accordingly.

Fig. 12 shows a representation of a 3D object and a modeling tool in a coordinate space according to another of the process steps of the method for controlling operation of a 3D tracking device of a 3D modeling instrument. In this example, the modeling instrument has been already within the activation volume around a given vertex (see Fig. 11, 1102.a) That particular vertex has been selected as the activation vertex and the user has modeled the object according to a selected modeling process which enables the movement of the selected vertex in a modeling plane defined by face 1108.b.In this particular example the active modeling volume is not finite in the directions of the plane defined by face 1108.b but it is limited in the perpendicular direction The modeling process, according to the selected vertex and the selected modeling plane, determines which of the vertices of the object are subject to change their coordinates, and how this change is calculated. In this example, the movement of the modeling instrument is projected 1202 onto the selected plane, which includes face 1108.b. The components 1204 and 1206 along the lines defined by the edges belonging to the selected plane and which meet at the selected vertex are also calculated. The selected modeling process in this case determines that the position of two of the vertices of the object will be changed according to the projection 1202 of the position of the modeling instrument on the modeling plane, the position of two other vertices of the object will be changed according to the projection 1204 of the position of the modeling instrument on one of the edges defining the selected face which includes the selected vertex, two other vertices of the object will be changed according to the projection 1206 of the position of the modeling instrument on the second of the edges defining the selected face which includes the selected vertex and finally, the position of the two remaining vertices will not change in the selected modeling process.

The modeling process ends when the modeling tool moves outside an active modeling volume of the coordinate space, in which the 3D modeling instrument can control the external 3D modeling process, and which is defined by the modeling process with respect to the position of the activation vertex, edge or face. In this particular example, the active modeling volume is a section of space with infinite lengths in the directions of projection components 1204 and 1206 (i.e. the plane defined by the selected face 1108.b) and a finite length in the direction perpendicular to that plane. In Fig. 12, 1210 represents half of this finite length, the other half being on the opposite side of the plane defined by the selected face 1108.b. In other embodiments the distances on either side of the plane may be different, enabling a direction-dependent modeling-termination resolution. Another embodiment of a modeling process, which is not discussed in the figures, also involves the selection of a given vertex (e.g. vertex 1102.a) by entering the activation volume (1004) around it with the modeling instrument, but then determining not a modeling plane, as disclosed with reference to Fig. 11 and 12, but a modeling line. This modeling line can be defined by the closest edge to the position of the modeling instrument, the edge including the selected vertex. In this example, the position of the modeling instrument would be projected on the line defined by the selected edge as long as the modeling instrument stays within the predefined active modeling volume

In another embodiment of the invention, the modeling process enables changing the position of only the edges that include the selected vertex and redefining the rest of the edges and faces of the object accordingly. This particular modeling process is described in connection to Fig. 13. Here, an object 1300 is being modeled by the modeling instrument 1006 which is currently located within the active modeling volume 1306 defined with respect to the current position of an activation edge 1302.b. In this particular case, the selected edge is being modeled on a modeling plane containing face 1304 from its starting position 1302.a to a current position 1302.b, The selected modeling process determines that the two vertices located at the ends of the selected vertex will change their positions, where as the rest of the vertices of the object will remain at their corresponding starting positions in the coordinate space. In this particular embodiment, the modeling operation ends when the modeling instrument exits the active modeling volume 1306, either by moving a given distance 1308.a or 1308.b away from the selected edge projected in a direction parallel to the selected edge 1302.b or by moving another distance 1310 away from the selected edge projected in a direction parallel to edge 1312. Distances 1308.a, 1308.b and 1310 may be of different lengths.

The choice between all available modeling processes (e.g. those involving a modeling plane, those involving a modeling line, those involving modeling different sets of vertices, those involving different families of object including prisms, pyramids or solids of revolution, adding vertices or points in a pre-existing object that are also subject to be selected as activation vertices and which may define additional edges of the object...) could be performed by selecting the desired modeling process from a list, using for example the modeling tool.

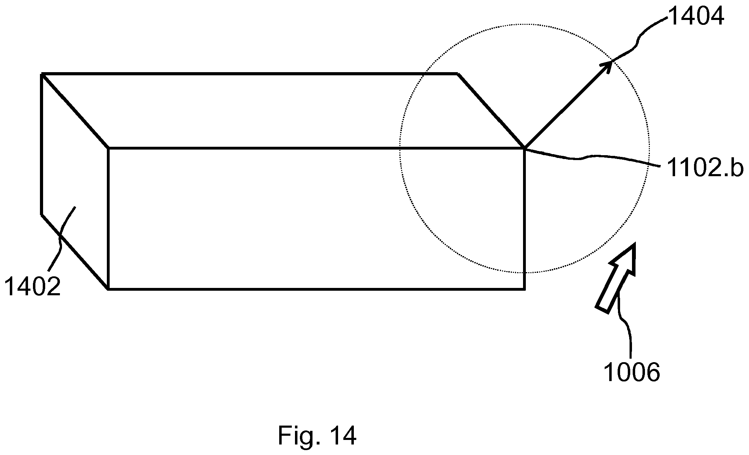

Fig. 14 shows a representation of a 3D object 1402 and a modeling tool 1006 in a coordinate space according to another of the process steps of the method for controlling operation of a 3D tracking device of a 3D modeling instrument. In this example, a modeling process has just been terminated because the modeling tool has left the active modeling volume associated to the chosen modeling operation In order to avoid further involuntary selections of the same vertex 1102.b due to unwanted and uncontrollable movements of the pointing device, induced for example by involuntary shaking of the user's hand holding the pointing device, a next selection of the vertex 1102.b is only possible after the modeling instrument has moved away from it at least a distance given by a reactivation threshold 1404. The reactivation distance is in this case larger than the deactivation distance measured from the same vertex

In another embodiment, in order to reactivate the modeling process, the modeling instrument must not only be outside the active modeling volume but also at a distance from the activation vertex, edge or face larger than the re-activation threshold distance amount 1404.

In a further set of embodiments, not shown in the figures, the user interacts with the modeling system by operating more than one pointing instrument, each of one controlling a 3D modeling instrument in the coordinate or virtual space. In one particular embodiment of this set, the use of more than two pointing devices (e.g. fingers), enables a 3D modeling of several activation vertices, edges or faces simultaneously.

In another embodiment that is advantageous in this context, the activation volumes allocated to the different vertices, edges and faces of the object do not overlap, thus allowing for an easy handling of the 3D modeling instrument for an unambiguous identification of the intended activation vertex, edge or face.

In another embodiment involving the operation of more than one pointing instrument, the use of two pointing instruments triggers a manipulation (i.e., not a 3D modeling) of viewing settings regarding the virtual space containing the object. For example, such manipulation can be used to allow for camera steering within the coordinate space, including the operations of rotation, scaling and shifting of the camera with respect virtual space

The described embodiments achieve a control of a 3D modeling technique in a 3D interaction space, where the position of the modeling instrument can be continuously and wirelessly tracked. A particular feature of this interaction environment is that, in contrast to e.g. computer mice, which comprise buttons that can be pressed by the user to start an interaction, no explicit instruction or gesture is needed to start the modeling interaction. The modeling operation acts directly on the 3D object, for instance according to the following method:
1) The position of at least one modeling instrument (e.g. a pointer, a finger, a stick, a pen...) is tracked and a 3D distance to the nearest object's face or the floor space is determined;
2) When the determined 3D distance lies below a certain first threshold value the nearest object's face to the modeling instrument is selected;
3) The 3D modeling process determines a 3D modeling operation based on the selected nearest face;
4) The user can now directly move the modeling instrument in the 3D interaction environment;
5) As long as the modeling instrument stays within a distance smaller than a second threshold value and measured in a perpendicular direction of the selected face, the position of the modeling instrument is projected onto the plane defined by the selected object's face. This position of the projected point will be output to the modeling tool in order to control display the modeled object to the user
6) To finish the modeling operation (determined by the modeling tool based on the selected face), the user moves the 3D modeling instrument away from the selected object's face a distance larger than that given by the second threshold value. The modeling operation thus ends at the projected point where the second threshold value is exceeded.

In summary, thus, a method for controlling operation of a 3D tracking device in tracking a 3D modeling instrument comprises activating an external 3D modeling process allocated to a combination of the 3D modeling instrument and the activation vertex, activation edge or activation face, upon determining that any vertex, edge or face of an object in a three-dimensional coordinate space qualifies as an activation vertex, activation edge or activation face due to the current position of the 3D modeling instrument being in a predefined activation volume defined, with respect to the given vertex, edge or face, as a limited volume of the coordinate space in which the 3D modeling instrument can activate the external 3D modeling process. The external 3D modeling process is deactivated upon determining that the current position of the 3D modeling instrument is outside an active modeling volume. Corresponding features are provided in a controller for controlling operation of a 3D tracking device for tracking a 3D modeling instrument, in a 3D tracking device for determining a position of a 3D modeling instrument with respect to an object in a three-dimensional coordinate space, in a 3D tracking system, in a 3D modeling system, and in a computer program.

## Claims

1. A method (100) for controlling operation of a 3D tracking device in tracking a 3D modeling instrument, the method comprising:
- receiving (102) coordinates of a plurality of vertices defining a plurality of edges or outer faces of an object (1002) with respect to a three-dimensional coordinate space;
- tracking (104), and providing to an external 3D modeling process, coordinates of a current position of at least one 3D modeling instrument (1006) with respect to the coordinate space, based on received position data of a current position of at least one external pointing instrument (704) in real space;
- upon determining (106) that any vertex, edge or face of the object qualifies as an activation vertex (1102.a), activation edge or activation face due to the current position of the 3D modeling instrument being in a predefined activation volume (1004) defined, with respect to the given vertex, edge or face, as a limited volume of the coordinate space in which the 3D modeling instrument can activate the external 3D modeling process:
- activating (108) an external 3D modeling process allocated to a combination of the 3D modeling instrument and the activation vertex, activation edge or activation face;
- receiving (110), from the external 3D modeling process, modeling volume information defining, with respect to a current position of the activation vertex, activation edge or activation face, a limited active modeling volume (1306) of the coordinate space, in which the 3D modeling instrument can control the external 3D modeling process;
- receiving (112), from the external 3D modeling process, changed coordinates defining a modeled position of the activation vertex (1102.b), activation edge or activation plane with respect to the coordinate space; and
- deactivating (114) the external 3D modeling process upon determining that the current position of the 3D modeling instrument is outside the active modeling volume.

2. The method of claim 1, further comprising:
- receiving (202) from the 3D modeling process modeling information identifying those vertices, edges or faces of the object for which the external 3D modeling process is activated and identifying a modeling surface or modeling line in the coordinate space, in which these vertices, edges or face can be moved according to the external 3D modeling process;
- providing (204) coordinates of a projection point on the modeling surface or modeling line to the external 3D modeling process as long as the external 3D modeling pro-cess is activated.

3. The method of claim 1 or 2, wherein tracking the coordinates of the current position of the at least one 3D modeling instrument with respect to the coordinate space comprises
- receiving (302) position data pertaining to at least one external pointing instrument representing the 3D modeling instrument in a predetermined three-dimensional volume of real space and
- calculating (304) the coordinates in the three dimensional coordinate space from the position data according to a predetermined registration rule.

4. The method of claim 3, wherein the current position of the pointing instrument in the predetermined three-dimensional volume is detected using electromagnetic radiation received from the pointing instrument.

5. The method of at least one of the preceding claims, further comprising
- monitoring (402), after the 3D modeling process has been deactivated, whether the current position of the 3D modeling instrument is within a predefined reactivation volume; and
- blocking (404) a next activation of the external 3D modeling process for the activation vertex, activation edge or activation face until determining that the current position of the 3D modeling instrument has left the reactivation volume.

6. The method of at least one of the preceding claims, wherein the activation volume is contained in the active modeling volume.

7. A controller (500) for controlling operation of a 3D tracking device for tracking a 3D modeling instrument, the controller comprising:
- a coordinate interface (502) for receiving coordinates of a plurality of vertices defining a plurality of edges or outer faces of an object with respect to a three-dimensional coordinate space;
- a tracking unit (504), which is configured to
- track, and provide to an external 3D modeling processor (506) executing a 3D modeling process, coordinates of a current position of at least one 3D modeling instrument with respect to the coordinate space, based on received position data of a current position of at least one external pointing instrument;
- upon determining that any vertex, edge or face of the object qualifies as an activation vertex, activation edge or activation face due to the current position of the 3D modeling instrument being in a predefined activation volume defined, with respect to the given vertex, edge or face, as a limited volume of the coordinate space in which the 3D modeling instrument can activate the external 3D modeling process:
- activate the external 3D modeling process allocated to a combination of the 3D modeling instrument and the activation vertex, activation edge or activation face;
- receive, from the external 3D modeling process, modeling volume information defining, with respect to a current position of the activation vertex, activation edge or activation face, a limited active modeling volume of the coordinate space, in which the 3D modeling instrument can control the external 3D modeling process;- receive, from the external 3D modeling processor, changed coordinates defining a modeled position of the activation vertex, activation edge or activation face with respect to the coordinate space; and
- deactivate the external 3D modeling process upon determining that the position of the 3D modeling instrument is outside the active modeling volume.

8. The controller of claim 7, further comprising:
- a 3D modeling interface (602) for receiving from the 3D modeling processor modeling information identifying those vertices, edges or faces of the object for which the external 3D modeling process is activated and identifying a modeling surface or modeling line in the coordinate space, in which these vertices, edges or face can be moved according to the external 3D modeling process; and wherein
- the tracking unit is further configured to provide coordinates of a projection point on the modeling surface or modeling line to the external 3D modeling process as long as the external 3D modeling process is activated.

9. The controller of claim 7 or 8, wherein the tracking unit is further configured to
- monitor, after the 3D modeling process has been deactivated, whether the cur-rent position of the 3D modeling instrument is within a predefined reactivation volume; and
- block a next activation of the external 3D modeling process for the activation vertex, activation edge or activation face until determining that the current position of the 3D modeling instrument has left the reactivation volume.

10. The controller of at least one of the claims 7 to 9, wherein the tracking unit is further configured to track the coordinates of the current position of the at least one 3D modeling instrument with respect to the coordinate space by
- receiving position data pertaining to an external pointing instrument representing the 3D modeling instrument in a predetermined three-dimensional volume of real space and
- calculating the coordinates from the position data according to a predetermined registration rule.

11. A 3D tracking device (700) for determining a position of a 3D modeling instrument with respect to an object in a three-dimensional coordinate space, the 3D tracking device comprising
- a position sensing unit, which is configured to determine position data pertaining to an external pointing instrument in a predetermined three-dimensional volume of real space, and
- a controller according to at least one of the claims 7 to 10, which receives the position data from the position sensing unit.

12. The 3D tracking device of claim 11, wherein the position sensing unit is configured to determine the position data using electromagnetic radiation received from the external pointing instrument.

13. A 3D tracking system (800), comprising a 3D tracking device according to claim 11 or 12, a pointing instrument and a display device which is connected with the 3D tracking device and configured to display a representation of the object in the three-dimensional coordinate space and a 3D modeling instrument at a position corresponding to the position of the pointing instrument in the predetermined three-dimensional volume of real space.

14. A 3D modeling system (900) comprising the 3D tracking system of claim 13 and a 3D modeling unit, which is in communication with the controller of the 3D tracking system, wherein the processing unit is configured to
- provide coordinates of a plurality of vertices defining a plurality of edges or out-er faces of an object with respect to a three-dimensional coordinate space;
- receive an activation signal, the activation signal also identifying the activation vertex, activation edge or activation face of the object;
- select the 3D modeling process to be applied to the object based on a combina-tion of the 3D modeling instrument and the activation vertex, activation edge or activation face;
- receive, from an external controller for controlling operation of a tracker of a 3D modeling instrument, coordinates of a current position of the 3D modeling instru-ment with respect to the coordinate space;
- determine changed coordinates defining a modeled position of the activation vertex, activation edge or activation face with respect to the coordinate space, based on the coordinates of a current position of the 3D modeling instrument;
- provide the changed coordinates to the external controller.

15. A computer program comprising executable code for executing a method for controlling operation of a tracker of a 3D modeling instrument according to at least one of the claims 1 to 6 when executed by a processor of a computer.

## Patentansprüche

1. Verfahren (100) zur Steuerung des Betriebs einer 3D-Trackingvorrichtung beim Verfolgen eines 3D-Modellierungsinstruments, wobei das Verfahren umfasst:
- Empfangen (102) von Koordinaten einer Vielzahl von Knotenpunkten, die eine Vielzahl von Kanten oder Außenflächen eines Objekts (1002) in Bezug auf einen dreidimensionalen Koordinatenraum definieren;
- Verfolgen (104), und Bereitstellen für einen externen 3D-Modellierungsprozess, von Koordinaten einer aktuellen Position mindestens eines 3D-Modellierungsinstruments (1006) in Bezug auf den Koordinatenraum, basierend auf empfangenen Positionsdaten einer aktuellen Position mindestens eines externen Zeigeinstruments (704) im Realraum;
- in Rekation auf ein Bestimmen (106), dass irgendein Knotenpunkt, irgendeine Kante oder irgendeine Fläche des Objekts sich qualifiziert als ein Aktivierungs-Knotenpunkt (1102.a), eine Aktivierungs-Kante oder eine Aktivierungs-Fläche, aufgrund der aktuellen Position des 3D-Modellierungsinstruments, die sich in einem vordefinierten Aktivierungs-Volumen befindet, das in Bezug auf den gegebenen Knotenpunkt, die gegebene Kante oder Fläche als ein begrenztes Volumen des Koordinatenraums definiert ist, in dem das 3D-Modellierungsinstrument den externen 3D-Modellierungsprozess aktivieren kann:
- Aktivieren (108) eines externen 3D-Modellierungsprozesses, der einer Kombination des 3D-Modellierungsinstruments und des Aktivierungs-Knotenpunkts, der Aktivierungs-Kante oder der Aktivierungs-Fläche zugeordnet ist;
- Empfangen (110) von Modellierungsvolumeninformationen vom externen 3D-Modellierungsprozess, die in Bezug auf eine aktuelle Position des Aktivierungs-Knotenpunkts, der Aktivierungs-Kante oder der Aktivierungs-Fläche ein begrenztes aktives Modellierungsvolumen (1306) des Koordinatenraums definieren, in dem das 3D-Modellierungsinstrument den externen 3D-Modellierungsprozess steuern kann;
- Empfangen (112) von geänderten Koordinaten vom externen 3D-Modellierungsprozess, die eine modellierte Position des Aktivierungs-Knotenpunkts (1102.b), der Aktivierungs-Kante oder der Aktivierungs-Fläche in Bezug auf den Koordinatenraum definieren; und
- in Reaktion auf ein Bestimmen, dass die aktuelle Position des 3D-Modellierungsinstruments außerhalb des aktiven Modellierungsvolumens liegt, Deaktivieren (114) des externen 3D-Modellierungsprozesses.

2. Verfahren nach Anspruch 1, das weiter umfasst:
- Empfangen (202) von Modellierungsinformationen vom 3D-Modellierungsprozess, die jene Knotenpunkte, Kanten oder Flächen des Objekts identifizieren, für die der externe 3D-Modellierungsprozess aktiviert ist, und Identifizieren einer Modellierungsoberfläche oder Modellierungslinie im Koordinatenraum, auf der diese Knotenpunkte, Kanten oder Flächen gemäß dem externen 3D-Modellierungsprozess bewegt werden können;
- Bereitstellen (204) von Koordinaten eines ProjektionsKnotenpunktes auf der Modellierungsoberfläche oder der Modellierungslinie für den externen 3D-Modellierungsprozess, solange der externe 3D-Modellierungsprozess aktiviert ist.

3. Verfahren nach Anspruch 1 oder 2, bei dem das Verfolgen der Koordinaten der aktuellen Position des mindestens einen 3D-Modellierungsinstruments in Bezug auf den Koordinatenraum umfasst:
- Empfangen (302) von Positionsdaten, die sich auf mindestens ein externes Zeigeinstrument beziehen, das das 3D-Modellierungsinstrument in einem vorbestimmten dreidimensionalen Volumen des realen Raumes repräsentiert, und
- Berechnen (304) der Koordinaten im dreidimensionalen Koordinatenraum anhand der Positionsdaten nach einer vorbestimmten Registrierungsregel.

4. Verfahren nach Anspruch 3, bei dem die aktuelle Position des Zeigeinstruments in dem vorbestimmten dreidimensionalen Volumen unter Verwendung von dem Zeigeinstrument her empfanger elektromagnetischer Strahlungerfasst wird.

5. Verfahren nach mindestens einem der vorhergehenden Ansprüche, das weiter umfasst:
- Überwachen (402), nachdem der 3D-Modellierungsprozess deaktiviert wurde, ob die aktuelle Position des 3D-Modellierungsinstruments innerhalb eines vordefinierten Reaktivierungsvolumens liegt; und
- Blockieren (404) einer nächsten Aktivierung des externen 3D-Modellierungsprozesses für den Aktivierungs-Knotenpunkt, die Aktivierungs-Kante oder die Aktivierungs-Fläche, bis zum Feststellen, dass die aktuelle Position des 3D-Modellierungsinstruments das Reaktivierungsvolumen verlassen hat.

6. Verfahren nach mindestens einem der vorhergehenden Ansprüche, bei dem das Aktivierungsvolumen im aktiven Modellierungsvolumen enthalten ist.

7. Steuergerät (500) zum Steuern des Betriebs einer 3D-Trackingvorrichtung zum Verfolgen eines 3D-Modellierungsinstruments, wobei das Steuergerät umfasst:
- eine Koordinatenschnittstelle (502) zum Empfangen von Koordinaten einer Vielzahl von Knotenpunkten, die eine Vielzahl von Kanten oder Außenflächen eines Objekts in Bezug auf einen dreidimensionalen Koordinatenraum definieren;
- eine Trackingeinheit (504), die ausgebildet ist,
- gestützt auf empfangene Positionsdaten einer aktuellen Position mindestens eines externen Zeigeinstruments, Koordinaten einer aktuellen Position mindestens eines 3D Modellierungsinstruments in Bezug auf den Koordinatenraum zu verfolgen und einem externen 3D Modellierungsprozessor (506) bereitzustellen, welcher einen 3D-Modellierungsprozess ausführt;
- in Reaktion auf ein Bestimmen, dass irgendein Knotenpunkt, irgendeine Kante oder irgendeine Fläche des Objekts sich qualifiziert als ein Aktivierungs-Knotenpunkt (1102.a), eine Aktivierungs-Kante oder eine Aktivierungs-Fläche, aufgrund der aktuellen Position des 3D-Modellierungsinstruments, die sich in einem vordefinierten Aktivierungs-Volumen befindet, das in Bezug auf den gegebenen Knotenpunkt, die gegebene Kante oder Fläche als ein begrenztes Volumen des Koordinatenraums definiert ist, in dem das 3D-Modellierungsinstrument den externen 3D-Modellierungsprozess aktivieren kann:
- einen externen 3D-Modellierungsprozess zu aktivieren, der einer Kombination des 3D-Modellierungsinstruments und des Aktivierungs-Knotenpunkts, der Aktivierungs-Kante oder der Aktivierungs-Fläche zugeordnet ist;
- Modellierungsvolumeninformationen vom externen 3D-Modellierungsprozess zu empfangen, die in Bezug auf eine aktuelle Position des Aktivierungs-Knotenpunkts, der Aktivierungs-Kante oder der Aktivierungs-Fläche ein begrenztes aktives Modellierungsvolumen des Koordinatenraums definieren, in dem das 3D-Modellierungsinstrument den externen 3D-Modellierungsprozess steuern kann;
- geänderte Koordinaten von dem externen 3D-Modellierungsprozessor zu empfangen, die eine modellierte Position des Aktivierungs-Knotenpunkts, der Aktivierungs-Kante oder der Aktivierungs-Fläche in Bezug auf den Koordinatenraum definieren; und
- in Reaktion auf ein Bestimmen, dass die aktuelle Position des 3D-Modellierungsinstruments außerhalb des aktiven Modellierungsvolumens liegt, den externen 3D-Modellierungsprozess zu deaktivieren.

8. Steuergerät nach Anspruch 7, das weiter umfasst:
- eine 3D-Modellierungsschnittstelle (602) zum Empfangen von Modellierungsinformationen vom 3D-Modellierungsprozessor, die jene Knotenpunkte, Kanten oder Flächen des Objekts identifizieren, für die der externe 3D-Modellierungsprozess aktiviert ist, und zum Identifizieren einer Modellierungsoberfläche oder einer Modellierungslinie im Koordinatenraum, auf der diese Knotenpunkte, Kanten oder Flächen gemäß dem externen 3D-Modellierungsprozess bewegt werden können; und bei dem
- die Trackingeinheit weiter konfiguriert ist, die Koordinaten eines ProjektionsKnotenpunktes auf der Modellierungsoberfläche oder der Modellierungslinie dme externen 3D-Modellierungsprozess bereitzustellen, solange der externe 3D-Modellierungsprozess aktiviert ist.

9. Steuergerät nach Anspruch 7 oder 8, bei dem die Trackingeinheit weiter ausgebildet ist,
- nach der Deaktivierung des 3D-Modellierungsprozesses zu überwachen, ob die aktuelle Position des 3D-Modellierungsinstruments innerhalb eines vordefinierten Reaktivierungsvolumens liegt; und
- eine nächste Aktivierung des externen 3D-Modellierungsprozesses für den Aktivierungs-Knotenpunkt, die Aktivierungs-Kante oder die Aktivierungs-Fläche zu blockieren, bis zum Feststellen, dass die aktuelle Position des 3D-Modellierungsinstruments das Reaktivierungsvolumen verlassen hat.

10. Steuergerät nach mindestens einem der Ansprüche 7 bis 9, bei dem die Trackingeinheit weiter ausgebildet ist, die Koordinaten der aktuellen Position des mindestens einen 3D Modellierungsinstruments in Bezug auf den Koordinatenraum zu verfolgen, durch
- Empfangen von Positionsdaten, die sich auf ein externes Zeigeinstrument beziehen, das das 3D-Modellierungsinstrument in einem vorbestimmten dreidimensionalen Volumen des realen Raums repräsentiert, und
- Berechnen der Koordinaten anhand der Positionsdaten nach einer vorbestimmten Registrierungsregel.

11. Eine 3D-Trackingvorrichtung (700) zum Bestimmen einer Position eines 3D-Modellierungsinstruments in Bezug auf ein Objekt in einem dreidimensionalen Koordinatenraum, wobei die 3D-Trackingvorrichtung umfasst:
- eine Positionserfassungseinheit, die ausgebildet ist, Positionsdaten zu bestimmen, die sich auf ein externes Zeigeinstrument in einem vorbestimmten dreidimensionalen Volumen des realten Raums beziehen, und
- ein Steuergerät nach mindestens einem der Ansprüche 7 bis 10, welches die Positionsdaten von der Positionserfassungseinheit erhält.

12. Die 3D-Trackingvorrichtung nach Anspruch 11, bei der die Positionserfassungseinheit ausgebildet ist, die Positionsdaten unter Verwendung von dem externen Zeigeinstrument empfanger elektromagnetischer Strahlung zu bestimmen.

13. Ein 3D-Trackingsystem (800), umfassend eine 3D-Trackingvorrichtung nach Anspruch 11 oder 12, ein Zeigeinstrument und eine Anzeigevorrichtung, die mit der 3D-Trackingvorrichtung verbunden und ausgebildet ist, eine Repräsentation des Objekts im dreidimensionalen Koordinatenraum und ein 3D-Modellierungsinstrument an einer Position, die der Position des Zeigeinstruments im vorbestimmten dreidimensionalen Volumen des realen Raumes entspricht, anzuzeigen.

14. Ein 3D-Modellierungssystem (900), welches das 3D-Trackingsystem nach Anspruch 13 und eine 3D-Modellierungseinheit umfasst, die mit der Steuerung des 3D-Trackingsystems in Verbindung steht, wobei die Verarbeitungseinheit ausgebildet ist,
- Koordinaten einer Vielzahl von Knotenpunkten zu liefern, die eine Vielzahl von Kanten oder Außenflächen eines Objekts in Bezug auf einen dreidimensionalen Koordinatenraum definieren;
- ein Aktivierungssignal zu empfangen, wobei das Aktivierungssignal auch den Aktivierungs-Knotenpunkt, die Aktivierungs-Kante oder die Aktivierungs-Fläche des Objekts identifiziert;
- den auf das Objekt anzuwendenden 3D-Modellierungsprozess auf der Grundlage einer Kombination des 3D-Modellierungsinstruments und des Aktivierungs-Knotenpunkts, der Aktivierungs-Kante oder der Aktivierungs-Fläche auszuwählen;
- von einem externen Steuergerät zur Steuerung des Betriebs eines Trackers eines 3D-Modellierungsinstruments Koordinaten einer aktuellen Position des 3D-Modellierungsinstruments in Bezug auf den Koordinatenraum zu empfangen;
- gestützt auf die Koordinaten einer aktuellen Position des 3D-Modellierungsinstruments geänderte Koordinaten zu bestimmen, die eine modellierte Position des Aktivierungs-Knotenpunkts, der Aktivierungs-Kante oder der Aktivierungs-Fläche in Bezug auf den Koordinatenraum definieren;
- die geänderten Koordinaten dem externen Steuergerät bereitzustellen.

15. Computerprogramm, umfassend ausführbaren Code zum Ausführen eines Verfahrens zum Steuern des Betriebs eines Trackers eines 3D-Modellierungsinstruments gemäß mindestens einem der Ansprüche 1 bis 6, wenn es von einem Prozessor eines Computers ausgeführt wird.

## Revendications

1. Procédé (100) pour contrôler le fonctionnement d'un dispositif de suivi 3D dans le cadre du suivi d'un instrument de modélisation 3D, le procédé comprenant les étapes consistant à :
- recevoir (102) les coordonnées d'une pluralité de sommets définissant une pluralité d'arêtes ou de faces externes d'un objet (1002) par rapport à un espace de coordonnées tridimensionnel ;
- suivre (104), et fournir à un processus de modélisation 3D externe, les coordonnées d'une position actuelle d'au moins un instrument de modélisation 3D (1006) par rapport à l'espace de coordonnées, sur la base des données de position reçues d'une position actuelle d'au moins un instrument de pointage externe (704) dans l'espace réel ;
- lors de la détermination (106) que tout sommet, arrête ou face de l'objet est qualifié de sommet d'activation (1102.a), d'arrêté d'activation ou de face d'activation en raison de la position actuelle de l'instrument de modélisation 3D dans un volume d'activation prédéfini (1004) défini, par rapport au sommet, à l'arête ou à la face donné, comme un volume limité de l'espace de coordonnées dans lequel l'instrument de modélisation 3D peut activer le processus de modélisation 3D externe :
- activer (108) un processus de modélisation 3D externe alloué à une combinaison de l'instrument de modélisation 3D et du sommet d'activation, de l'arrête d'activation ou de la face d'activation ;
- recevoir (110), à partir du processus de modélisation 3D externe, des informations de volume de modélisation définissant, par rapport à une position actuelle du sommet d'activation, de l'arrête d'activation ou de la face d'activation, un volume de modélisation actif limité (1306) de l'espace de coordonnées, dans lequel l'instrument de modélisation 3D peut contrôler le processus de modélisation 3D externe ;
- recevoir (112), à partir du processus de modélisation 3D externe, des coordonnées modifiées définissant une position modélisée du sommet d'activation (1102.b), de l'arrête d'activation ou du plan d'activation par rapport à l'espace de coordonnées ; et
- désactiver (114) le processus de modélisation 3D externe après avoir déterminé que la position actuelle de l'instrument de modélisation 3D est en dehors du volume de modélisation actif.

2. Procédé selon la revendication 1, comprenant en outre les étapes consistant à :
- recevoir (202) du processus de modélisation 3D d'informations de modélisation identifiant les sommets, les arrêtes ou les faces de l'objet pour lesquels le processus de modélisation 3D externe est activé et identifier une surface de modélisation ou une ligne de modélisation dans l'espace de coordonnées, dans lequel ces sommets, arêtes ou faces peuvent être déplacés selon le processus de modélisation 3D externe ;
- fournir (204) les coordonnées d'un point de projection sur la surface de modélisation ou la ligne de modélisation au processus de modélisation 3D externe tant que le processus de modélisation 3D externe est activé.

3. Procédé selon la revendication 1 ou 2, dans lequel le suivi des coordonnées de la position actuelle du au moins un instrument de modélisation 3D par rapport à l'espace de coordonnées comprend comprenant les étapes consistant à :
- recevoir (302) de données de position se rapportant à au moins un instrument de pointage externe représentant l'instrument de modélisation 3D dans un volume tridimensionnel prédéterminé d'espace réel et
- calculer (304) les coordonnées dans l'espace de coordonnées tridimensionnel à partir des données de position selon une règle de repérage prédéterminée.

4. Procédé selon la revendication 3, dans lequel la position actuelle de l'instrument de pointage dans le volume tridimensionnel prédéterminé est détectée en utilisant un rayonnement électromagnétique reçu de l'instrument de pointage.

5. Procédé selon au moins l'une des revendications précédentes, comprenant en outre comprenant les étapes consistant à :
- surveiller (402), après la désactivation du processus de modélisation 3D, si la position actuelle de l'instrument de modélisation 3D se situe dans un volume de réactivation prédéfini ; et
- bloquer (404) une prochaine activation du processus de modélisation 3D externe pour le sommet d'activation, l'arrête d'activation ou la face d'activation jusqu'à déterminer que la position actuelle de l'instrument de modélisation 3D a quitté le volume de réactivation.

6. Procédé selon au moins l'une des revendications précédentes, dans lequel le volume d'activation est contenu dans le volume de modélisation actif.

7. Contrôleur (500) pour contrôler le fonctionnement d'un dispositif de suivi 3D pour suivre un instrument de modélisation 3D, le contrôleur comprenant :
- une interface de coordonnées (502) pour recevoir les coordonnées d'une pluralité de sommets définissant une pluralité d'arêtes ou de faces externes d'un objet par rapport à un espace de coordonnées tridimensionnel ;
- une unité de suivi (504), qui est configurée pour
- suivre et fournir à un processeur de modélisation 3D externe (506) exécutant un processus de modélisation 3D, les coordonnées d'une position actuelle d'au moins un instrument de modélisation 3D par rapport à l'espace de coordonnées, sur la base des données de position reçues d'une position actuelle d'au moins un instrument de pointage externe ;
- suite à une détermination que tout sommet, arrête ou face de l'objet est qualifié de sommet d'activation, d'arrêté d'activation ou de face d'activation en raison de la position actuelle de l'instrument de modélisation 3D se trouvant dans un volume d'activation prédéfini défini, par rapport au sommet, à l'arrête ou face donné, en tant que volume limité de l'espace de coordonnées dans lequel l'instrument de modélisation 3D peut activer le processus de modélisation 3D externe :
- activer le processus de modélisation 3D externe alloué à une combinaison de l'instrument de modélisation 3D et du sommet d'activation, de l'arrête d'activation ou de la face d'activation ;
- recevoir, à partir du processus de modélisation 3D externe, des informations de volume de modélisation définissant, par rapport à une position actuelle du sommet d'activation, de l'arrête d'activation ou de la face d'activation, un volume de modélisation actif limité de l'espace de coordonnées, dans lequel l'instrument de modélisation 3D peut contrôler le processus de modélisation 3D externe ;
- recevoir, du processeur de modélisation 3D externe, les coordonnées modifiées définissant une position modélisée du sommet d'activation, de l'arrête d'activation ou de la face d'activation par rapport à l'espace de coordonnées ; et
- désactiver le processus de modélisation 3D externe après avoir déterminé que la position de l'instrument de modélisation 3D est en dehors du volume de modélisation actif.

8. Contrôleur selon la revendication 7, comprenant en outre :
- une interface de modélisation 3D (602) pour recevoir du processeur de modélisation 3D des informations de modélisation identifiant ceux parmi les sommets, arrêtes ou faces de l'objet pour lesquels le processus de modélisation 3D externe est activé et identifier une surface de modélisation ou ligne de modélisation dans l'espace de coordonnées, dans lequel ces sommets, arêtes ou faces peuvent être déplacés selon le processus de modélisation 3D externe ; et dans lequel
- l'unité de suivi est en outre configurée pour fournir des coordonnées d'un point de projection sur la surface de modélisation ou la ligne de modélisation au processus de modélisation 3D externe tant que le processus de modélisation 3D externe est activé.

9. Contrôleur selon la revendication 7 ou 8, dans lequel l'unité de suivi est en outre configurée pour
- surveiller, après la désactivation du processus de modélisation 3D, si la position actuelle de l'instrument de modélisation 3D se situe ou pas dans un volume de réactivation prédéfini ; et
- bloquer une prochaine activation du processus de modélisation 3D externe pour le sommet d'activation, l'arrête d'activation ou la face d'activation jusqu'à déterminer que la position actuelle de l'instrument de modélisation 3D a quitté le volume de réactivation.

10. Contrôleur selon au moins l'une des revendications 7 à 9, dans lequel l'unité de suivi est en outre configurée pour suivre les coordonnées de la position actuelle du au moins un instrument de modélisation 3D par rapport à l'espace de coordonnées en
- recevant des données de position se rapportant à un instrument de pointage externe représentant l'instrument de modélisation 3D dans un volume tridimensionnel prédéterminé d'espace réel et
- calculant les coordonnées à partir des données de position selon une règle de repérage prédéterminée.

11. Dispositif de suivi 3D (700) pour déterminer la position d'un instrument de modélisation 3D par rapport à un objet dans un espace de coordonnées tridimensionnel, le dispositif de suivi 3D comprenant
- une unité de détection de position, qui est configurée pour déterminer les données de position se rapportant à un instrument de pointage externe dans un volume tridimensionnel prédéterminé d'espace réel, et
- un contrôleur selon au moins l'une des revendications 7 à 10, qui reçoit les données de position de l'unité de détection de position.

12. Dispositif de suivi 3D selon la revendication 11, dans lequel l'unité de détection de position est configurée pour déterminer les données de position en utilisant un rayonnement électromagnétique reçu de l'instrument de pointage externe.

13. Système de suivi 3D (800), comprenant un dispositif de suivi 3D selon la revendication 11 ou 12, un instrument de pointage et un dispositif d'affichage qui est connecté au dispositif de suivi 3D et configuré pour afficher une représentation de l'objet dans l'espace de coordonnées tridimensionnel et un instrument de modélisation 3D à une position correspondant à la position de l'instrument de pointage dans le volume tridimensionnel prédéterminé de l'espace réel.

14. Système de modélisation 3D (900) comprenant le système de suivi 3D selon la revendication 13 et une unité de modélisation 3D, qui est en communication avec le contrôleur du système de suivi 3D, dans lequel l'unité de traitement est configurée pour
- fournir les coordonnées d'une pluralité de sommets définissant une pluralité d'arêtes ou de faces externes d'un objet par rapport à un espace de coordonnées tridimensionnel ;
- recevoir un signal d'activation, le signal d'activation identifiant également le sommet d'activation, l'arrête d'activation ou la face d'activation de l'objet ;
- sélectionner le processus de modélisation 3D à appliquer à l'objet sur la base d'une combinaison de l'instrument de modélisation 3D et du sommet d'activation, de l'arrête d'activation ou de la face d'activation ;
- recevoir, d'un contrôleur externe pour contrôler le fonctionnement d'un tracker ou dispositif de suivi d'un instrument de modélisation 3D, les coordonnées d'une position actuelle de l'instrument de modélisation 3D par rapport à l'espace de coordonnées ;
- déterminer les coordonnées modifiées définissant une position modélisée du sommet d'activation, de l'arrête d'activation ou de la face d'activation par rapport à l'espace de coordonnées, sur la base des coordonnées d'une position actuelle de l'instrument de modélisation 3D ;
- fournir les coordonnées modifiées au contrôleur externe.

15. Programme informatique comprenant un code exécutable pour exécuter un procédé pour contrôler le fonctionnement d'un tracker ou dispositif de suivi d'un instrument de modélisation 3D selon au moins l'une des revendications 1 à 6 lorsqu'il est exécuté par un processeur d'un ordinateur.
